Europäisches Patentamt

**European Patent Office**

Office européen des brevets

(11) Publication number: **0 077 552**
**A1**

(12) **EUROPEAN PATENT APPLICATION**

(21) Application number: 82109576.7

(22) Date of filing: 16.10.82

(51) Int. Cl.³: **C 09 B 67/10**
C 09 B 67/44, C 09 B 67/46
C 09 C 1/24
//C10L1/10, C10M1/08, H01F1/113,
H01F1/37

(30) Priority: 19.10.81 JP 166840/81
21.10.81 JP 168033/81

(43) Date of publication of application:
27.04.83 Bulletin 83/17

(84) Designated Contracting States:
DE FR GB IT

(71) Applicant: Matsushita Electric Industrial Co., Ltd.
1006, Oaza Kadoma
Kadoma-shi Osaka-fu, 571(JP)

(72) Inventor: Yubakami, Keiichi
Shoka-ryo 22-7 Korinishino-cho
Neyagawa-shi Osaka-fu(JP)

(72) Inventor: Matsuda, Hiromu
Showa-ryo 16-1 Miyamae-cho
Kadoma-shi Osaka-fu(JP)

(72) Inventor: Soga, Mamoru
1-1-22, Saikudani Tennoji-ku
Osaka-shi Osaka-fu(JP)

(72) Inventor: Sonoda, Nobuo
1-16-5, Torikainaka
Settsu-shi Osaka-fu(JP)

(72) Inventor: Shimotsuma, Wataru
5-12-8, Yamatedai
Ibaraki-shi Osaka-fu(JP)

(74) Representative: Eisenführ & Speiser
Martinistrasse 24
D-2800 Bremen 1(DE)

(54) Colored oil.

(57) The present invention provides colored oil having a wide variety of color, which is easily produced by coloring a liquid organic compound.

According to the present invention, even aliphatic hydrocarbons such as kerosene and gasoline which cannot or hardly be colored by usual manners are easily colored. The colored oil of the present invention comprises a colorant medium, a liquid organic compound having no compatibility with the colorant medium and a colorant (A) having an affinity to the colorant medium but no or little affinity to the liquid organic compound, and the colorant medium containing the colorant (A) is dispersed in the liquid organic compound. The liquid organic compound may contain a colorant (B). The colored oil of the present invention can easily be prepared by a very simple manner for dispersion.

EP 0 077 552 A1

- 1 -

COLORED OIL

## Background

The present invention relates to a colored oil, in which a liquid containing a colorant is dispersed in liquid organic compound.

So far, in the coloring of such the liquid organic compound soluble dyestuffs therein are used. However, most of dyestuffs are insoluble or hardly soluble in general solvents excepting specific organic compounds having a high polarity such as alcohols, cellosolves and the like, so that the coloring of the organic solvents is restricted in variety and density of color. Further, it is difficult to disperse stably pigments in the liquid organic compound in general. Additionally, there is a defect that the grinding of pigments needs a long time.

## Summary of the Invention

An object of the present invention is to produce a colored oil having no defects as aforementioned.

One of other objects of the present invention is to color the liquid organic compound various color in wide density.

The above objects can be achieved by dispersing a colorant medium containing a colorant in the liquid organic compounds.

## Details

The colored oil according to the present invention is characterized in that the colorant medium containing the colorant is dispersed in the liquid organic compound. That is, the colored oil is one colored by dispersing a liquid in which the colorant dissolves or disperses in the liquid organic compound.

The colored oil of the present invention requires that the color density dose not change for a long term. Therefore, in the aforementioned dispersion, as the colorant medium is more micronized, more stable colored oil is obtained.

In order to disperse the medium containing colorant, the use of a surfactant is a very useful means.

Alternatively, the liquid organic compound may contain a colorant. In the context, the colorant contained in the colorant medium and the colorant contained in the liquid organic compound are referred to as colorant (A) and colorant (B) respectively. In the same view point, the colorant medium containing the colorant (A) may be dispersed by the surfactant and the colorant (B) may also be dispersed by a surfactant. The surfactants used for dispersions of colorant (A) and of colorant (B) are named as surfactant (A) and surfactant (B) respectively.

The colored oil in which the colorant medium containing colorant (A) is dispersed in the liquid organic compound containing colorant (B) becomes a mixed color of colorants (A) and (B). In the present invention it is possible to disperse the colorant medium containing colorant (A) in the liquid organic compound without changing a content of colorant (B). At this time, the colorant (B) may be dispersed or dissolved with the surfactant (B).

A magnetic particle having a diameter of about 50 to 200 $\overset{\circ}{A}$ may be used as the colorant (B), which may be dispersed in the liquid organic compound with a surfactant (B) to give a magnetic fluid. When the magnetic fluid is colored by a colorant medium containing colorant (A), a colored oil having characteristics as a magnetic fluid is obtained.

The colorant (A) dissolves or disperses in the colorant medium, whereas the colorant (B) dissolves or disperses in the liqiud organic compound. The colorant medium and the liquid organic compound are not compatible, so that generally different colorants are used as the colorants (A) and (B) each other.

The surfactant (A) may be used to disperse the colorant medium in the liquid organic compound more stably. Besides, the surfactant (B) is used to disperse the colorant (B) in the liquid organic compound more stably. Therefore, the surfactants (A) and (B) may be the same materials in some cases.

Materials used in the colored oil of the present invention are illustrated hereinafter, although it is not construed as limiting the invention to the details.

As the colorant medium of the present invention, water; alcohols such as methanol, ethanol and the like; cellosolves such as methyl cellosolve, ethyl cellosove and the like; ketones such as diethyl ketone, ethyl methyl ketone and the like; and ethers such as diethyl ether and the like are exemplified.

The colorant (A) includes following dyestuffs, for example, direct dye such as C.I. Direct Violets 1, 7, 9, C.I. Direct Blues 2, 6, 15 and the like; acid dye such as C.I. Acid Oranges 8, 10, 19, C.I. Acid Greens 7, 9, 41 and the like; basic dye such as C.I. Basic Blues 1, 3, 5, C.I. Basic Greens 1, 4, 6, and the like; and disperse dye such as C.I. Disperse Violets 18, 23, 26, C.I. Disperse Blues 55, 56, 58, and the like. Further, organic pigments or inorganic pigments stably dispersible in water, alcohols, cellosolves, acetone and so on may also be used.

In the aforementioned materials, considering the stability, usability and the like, the combination of water and a dyestuff is most preferable.

As the liquid organic compound aromatic compounds such as benzene, toluene and the like, aliphatic hydrocarbons such as hexane, heptane, gasoline, mineral spirit and the like, cyclic hydrocarbons such as cyclohexane and the like, halogenized hydrocarbons and esters are exemplified.

As the example of the surfactant (A) nonionic surfactant, anionic surfactant are exemplified, which may be used solely or combinedly depended on the colorant medium and the liquid organic compound. As the surfactant (B) a carbonic acid type surfactant, a nonionic surfactant or an anionic surfactant are used solely or combinedly.

The colorant (B) includes an oil soluble dyestuff such as C.I. Solvent Yellows 2 and 6, C.I. Solvent Blues 25, 36 and 55 and the like, and an organic or inorganic pigment.

A dispersion of the colorant medium containing colorant (A) may be carrid out by a conventional method such as mixer, colloid mill, homogenizer and the like. The time for the dispersion may be varied depended on applied means, but usually several or several tens hours or so are enough. That is, using pigment a solid must be ground, which is difficult and needs long time, whereas according to the present invention the colored oil can be easilly produced within a comparatively short term because of liquid dispersion.

Formulations, conditions for dispersion and results are indicated in Table 1 as examples of the present invention.

Table 1

| Example No. | Liquid Organic Compound (ml) | Colorant (A) (g) | Colorant Medium (ml) | Surfactant (A) (ml) | Dispersion Method (hours) | Color |
|---|---|---|---|---|---|---|
| A | Kerosene (50) | C.I. Direct Yellow 11 (0.16) | Water (8) | – | Homogenizer (2) | Yellow |
| B | Gasoline (60) | C.I. Acid Red 9 (0.20) | Water (10) | Span 80 (a) (20) | Homogenizer (1) | Red |
| C | Kerosene (60) | C.I. Basic Blue 60 (0.20) | Water (10) | Emulgen 903 (b) (20) | Colloid Mill (1) | Blue |
| D | Kerosone (60) | C.I. Acid Green 7 (0.16) | Methanol (8) | Span 80 (20) | Homogenizer (1) | Green |
| E | Mineral Turpentine (60) | C.I. Direct Blue 86 (0.16) | Water (8) | Span 80 (18) | Homogenizer (1) | Blue |
| F | Petroleum Ether (50) | C.I. Disperse Orange 13 (0.12) | Water (6) | OP – 80 (c) (15) | Colloid Mill (1) | Dark Orange |
| G | Toluene (70) | C.I. Mordant Blue 48 (0.12) | Water (6) | OP – 80 (15) | Homogenizer (1) | Blue |

Notes: (a) Span 80 sorbitan mono-oleate available from Kao Soap Corporation
(b) Emulgen 903 polyoxiethyrene nonylphenol available from Kao Soup Corporation
(c) OP-80 sorbitan mono-stearate available from Nippon Oils & Fats Co., Ltd.

Table 2

| Example No. | Liquid Organic Compound (ml) | Colorant (B) (g) | Surfactant (B) (g) | Colorant (A) (g) | Colorant Medium (ml) | Surfactant (A) (ml) | Dispersion Method (hours) | Color |
|---|---|---|---|---|---|---|---|---|
| H | Toluene (70) | C.I. Solvent Blue 55 (4) | – | C.I. Acid Yellow 7 (0.12) | Water (6) | OP – 80 (15) | Homogenizer (1) | Green |
| I(d) | Kerosene | Cobalt Blue (Total 60 ml as the dispersion of cobalt blue) | Oleic Acid | C.I. Direct Blue 80 (0.20) | Water (10) | Emulgen 903 (20) | Homogenizer (1) | Blue |
| J(e) | Magnetic Fluid (A) (65 ml) | | | C.I. Acid Green 79 (0.98) | Water (15) | Span 20 (20) | Colloid Mill (1) | Dark Green |
| K(e) | Magnetic Fluid (B) (70 ml) | | | C.I. Basic Violet 10 (0.50) | Methyl Cellosolve (10) | Arlacel 83 (20) | Homogenizer (1) | Dark Green |
| L(e) | Magnetic Fluid (C) (60 ml) | | | C.I. Dirct Blue 199 (0.75) | Water (15) | Emulgen 903 (25) | Homogenizer (1) | Dark Green |

Notes: (d) The dispersion of cobalt blue is prepared by dispersing the cobalt blue in kerosene using a theoretical amount of oleic acid calculated as adsorption area of an oleic acid molecular being 10 $\overset{\circ}{A}{}^2$ and average particle size of the cobalt blue being of about 80 $\overset{\circ}{A}$, in which the concentration of the cobalt blue is 10 percent by weight.

(e) The magnetic fluids (A), (B) and (C) are available from Matsumoto Yushi Seiyaku Co., Ltd. and have magnetic materials shown in Table 3. The concentration of the magnetic material is 15 percent by weight in any case.

Table 3

| Magnetic Fluid No. | Magnetic Materials | Formular | Color |
|---|---|---|---|
| A | Magnetite | $FeO\ Fe_2O_3$ | Dark Brown |
| B | Iron-Zinc ferrite | $(Fe_{0.7}Zn_{0.3})O\ Fe_2O_3$ | Dark Brown |
| C | Manganese-Zinc ferrite | $(Mn_{0.7}Zn_{0.3})O\ Fe_2O_3$ | Black-dark Brown |

When colored oils (B), (C), (D), (E), (F), (G), (I), (J), (K), and (L) are hold for several months, any release materials are not observed , the colored oils (A) and (H) did not separate for at least sevsral days.

According to the present invention aliphatic hydrocarbons such as kerosene and gasoline which are most difficult to be colored by conventional manners can easily be colored. Further, it is possible to color easily a variety of liquid organic compounds, for example aromatic compounds such as toluene, alicyclic compounds, halogenized hydrocarbons and esters.

As the colorant (A) an easily available colorant is applicable. Tow or more colorants (A) may be dissolved and or dispersed in the colorant medium. As the colorant medium containing the colorant (A) can stable be dispersed in the colored oil, two or more colored oil can be mixed. In addition, the liquid organic compound in the colored oil can involve the colorant (B). Therefore the colored oil according to the present invention can be given various colors.

The colored oil according to the present invention is not so different from the original noncolored oil in physical properties such as viscocity , so that the colored oil of the present invention can be used under the same conditions as the noncolored oil.

If the liquid organic compound contains magnetic particles as a pigment, the colored oil has a fanction of the magnetic fluid, and so the colored oil of the present invention can be applied to the field of the magnetic fluid.

As aforememtioned according to the present invention the colored oil can be easily controlled in the color, and the organic compound which is stably colored can be easily prepared. Therefore the colored oil of the present invention has many industrial applications.

What is claimed is:

1.      A colored oil which comprises (1) a colorant medium being one selected from the group consisting of water, alcohols, cellosolves, ketones, and ethers , (2) a liquid organic compound having no compatibility to said colorant medium, and (3) a colorant (A) having an affinity to the colorant medium but no or little affinity to said liquid organic compound, in which said colorant (A) is dissolved or dispersed in the colorant medium and the colorant medium containing the colorant (A) is additionally dispersed in the liquid organic compound.

2.      The colored oil according to Claim 1 in which the liquid organic compound is at least one selected from the group consisting of hydrocarbons, fluorohydrocabons and esters.

3.      The colored oil according to Claim 1 or 2 in which the colorant medium containing colorant (A) is dispersed in the liquid organic compound with a surfactant.

4.      The colored oil according to any one of preceding Cliams in which the liquid organic compound is colored with a colorant (B).

5.      The colored oil according to Claim 4 in which the colorant (B) is a pigment and is dispersed in the liquid organic compound with a surfactant.

6.      The colored oil according to Claim 4 or 5 in which the colorant (B) is a fine magnetic particle.

| | DOCUMENTS CONSIDERED TO BE RELEVANT | | EP 82109576.7 |
|---|---|---|---|

| Category | Citation of document with indication, where appropriate, of relevant passages | Relevant to claim | CLASSIFICATION OF THE APPLICATION (Int. Cl. 3) |
|---|---|---|---|
| A | DE - B2 - 2 603 918 (BASF AG) <br><br> * Claims 1-3; column 1, line 61 - column 2, line 6 * <br><br> -- | 1,2 | C 09 B 67/10 <br> C 09 B 67/44 <br> C 09 B 67/46 <br> C 09 C 1/24// <br> C 10 L 1/10 <br> C 10 M 1/08 <br> H 01 F 1/113 <br> H 01 F 1/37 |
| P,A | EP - A1 - 0 041 140 (BASF AG) (09-12-1981) <br><br> * Page 1, lines 1-27; page 3, lines 19-22 * <br><br> -- | 1,2 | |
| A | DE - B - 1 670 406 (BADISCHE ANILIN-& SODA-FABRIK AG) <br><br> * Column 1, lines 1-5, 40-55; column 2, lines 3-42 * <br><br> ---- | 1,2 | |

| | | TECHNICAL FIELDS SEARCHED (Int. Cl. 3) |
|---|---|---|
| | | C 09 B <br> C 09 C <br> C 09 D <br> C 10 L <br> C 10 M <br> H 01 F <br> G 01 N |

The present search report has been drawn up for all claims

| Place of search <br> VIENNA | Date of completion of the search <br> 21-01-1983 | Examiner <br> HAUSWIRTH |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82